# EUROPEAN PATENT SPECIFICATION

(11) **EP 4 110 839 B1**
(45) Date of publication and mention of the grant of the patent: **22.11.2023**
(21) Application number: 21705413.9
(22) Date of filing: 24.02.2021
(51) Int. Cl.: C08F 283/01, C08G 63/676, C08L 67/06, C09D 167/06

(54) **UNSATURATED POLYESTER RESIN COMPOSITIONS AND METHODS FOR PREPARATION THEREOF**
UNGESÄTTIGTE POLYESTERHARZZUSAMMENSETZUNGEN UND VERFAHREN ZUR HERSTELLUNG DAVON
COMPOSITIONS DE RÉSINE DE POLYESTER INSATURÉ ET SES PROCÉDÉS DE PRÉPARATION

(30) Priority: 24.02.2020 EP 20159020
(43) Date of publication of application: 04.01.2023
(73) Proprietor: ACR III B.V., 7764 AN Zandpol (NL)
(72) Inventor: POSTHUMUS, Willem, 8032 XX Zwolle (NL)
(74) Representative: De Clercq & Partners
(86) International application number: PCT/EP2021/054481
(87) International publication number: WO 2021/170596

(56) References cited:
- US-A- 4 952 652
- US-B2- 8 470 926

## Description

### TECHNICAL FIELD

The present invention is in the field of unsaturated polyester resin compositions and methods of preparing these compositions. In particular, the present invention aims to provide low-odour and low-emission polyester resin compositions.

### BACKGROUND

Unsaturated polyester resin compositions are used, amongst others, to make composite parts and products, in for example open moulds. In addition to the resin composition, the composite parts and products often comprise reinforcing fibres. For an efficient production and satisfactory performance of the finished product, the resin compositions have to fulfil many requirements.

For instance, the viscosity of the unsaturated polyester resin composition needs to be balanced such that the unsaturated polyester resin composition flows well when filling the spaces between the reinforcing fibres, yet it should not be too thin such that the composition flows out again before the cure has taken place.

The curing time of the unsaturated polyester resin composition needs to be tuned such that there is enough processing time to combine the liquid unsaturated polyester resin composition and reinforcing fibres in the mould, yet once curing has started it should not take too long to reach sufficient stiffness to enable demoulding of the product. A common method to assess whether the resin curing is sufficient for demoulding, is measurement of the hardness according ASTM-648 using a Barcol 934.1 testing device. Preferably, the reading of the scale should be more than 10, more preferably it should be more than 20.

In the finished product, the cured resin should be able to withstand mechanical loads and temperatures that are expected during the service life of the product. Hence, the cured resin should have a high enough heat deflection temperature (HDT).

Unsaturated polyester resin compositions with styrene as reactive diluent may fulfil some of these requirements, but during processing they give off considerable VOC emissions. Furthermore, styrene has a carcinogenic, mutagenic or reprotoxic (CMR) classification, which implies that adequate ventilation (and optional processing of the ventilated air) is necessary to avoid exposure of the worker and the environment to elevated styrene concentrations. For this reason, there is a need for unsaturated polyester resin compositions with non-volatile reactive diluents that preferably also have low odour and preferably are non-CMR. However, such existing unsaturated polyester resin compositions typically show poor surface cure, and/or show deficiencies in strength or temperature resistance.

Unsaturated polyester resin compositions are cured through radical polymerisations. In general, radical polymerisations are strongly hampered by oxygen. For unsaturated polyester resin compositions that are applied in open moulds, it is a known problem that the airside of the resin is less cured. For resins with volatile reactive diluents like styrene, physical drying leaves a polyester-rich layer at the surface, which is (near) solid. This (near) solid layer forms a barrier against oxygen, which allows adequate cure of the resin just below the surface and creates a surface that is dry to the touch. With non-volatile diluents, the solidification has to come solely from the radical polymerisation, which at the air-exposed surface is strongly hampered by oxygen. Frequently, one day after starting the curing, the surfaces of resins with non-volatile reactive diluents are still liquid or tacky. In other cases, the poor surface curing leads to soft surfaces.

In US20040220340A1, styrene-free resin compositions are described that are made by combining unsaturated polyester and urethane (meth)acrylates. This document claims that in order to achieve adequate performance, unsaturated polyester resins need to be mixed with a hydroxyl (meth)acrylate and a urethane (meth)acrylate. These resins will have a high concentration of hydroxyl groups, which can lead to significant water absorption, which in turn can be negative for material integrity or hydrolysis resistance. Furthermore, the production of these resins is relatively complex. The claimed resin compositions require synthesis of two different resins following different procedures and combining these. If both resins are produced in the same reactor, an intermediate cleaning step is needed. Alternatively, separate reactors dedicated to the different resin types need to be used. In both cases, a separate mixing tank for the two resin types is needed. Either procedure is significantly more complex than the production of standard unsaturated polyester resins, both for required equipment and for process planning and logistics. The higher complexity leads to higher costs and increases the chance of production errors. A resin composition that can be produced in one reactor and in a single batch is therefore highly preferred.

US20150018479 describes the use of diallyl trimethylolpropane methacrylate as a diluent to improve the surface cure. Although this solution provides reasonable curing, there is another disadvantage. In open mould applications, typically the curing is initiated by peroxides, which need to be activated by accelerators. The most used accelerator is cobalt octoate. Cobalt and other oxidative driers catalyse the oxidation of the allyl ether group from diallyl trimethylolpropane methacrylate resulting in the formation of acrolein. As acrolein is volatile, highly toxic, and carcinogenic, this is a very undesirable side-reaction. This reaction is known to occur with cobalt and with oxidative driers in general. As such, the use of allyl ether groups in combination with cobalt or other transition metals is preferably avoided in open mould applications.

UV-curing resins typically are made with low volatile acrylate or methacrylate diluents. In such resins, poor surface cure is a well-known problem. A list of different additives that can improve surface cure is given in Progress in Organic Coatings 77 (2014) p1789-1798. Yet, all described additives have issues like poor stability in unsaturated polyester resins, toxicity, poor odour, yellowing, and poor availability. None of these additives appears suitable in unsaturated polyesters for open mould applications, for which storage stability and safe use are essential. US 4 952 652 A relates to unsaturated polyester compositions that are quickly curable and capable of providing superior surface quality to molded products obtainable therefrom which are useful particularly as exterior body panels and other externally mounted parts of automobiles. The example 3 discloses a composition synthesized from 0,7 mol of propylene glycol, 0,3 mol of dicyclopentadiene and 1,0 mol of maleic acid anhydride. Moreover, reactive diluents like (meth)acrylic compounds are used.

Another method to improve surface cure is giving the unsaturated polyester resin composition a post-cure at elevated temperatures, for instance 60-80°C. However, this post-cure is energy intensive, it increases cycle times, and special equipment is needed. These drawbacks are most prominent for large objects.

Preferably, the cured resin should be able to withstand the forces and temperatures that are expected in the application. For various applications, the minimum values may vary strongly. However, for construction purposes typically the following minimum requirements are set. The HDT of the resin preferably is at least 55°C, and more preferably at least 60 °C. The elongation at break preferably is at least 1.5%, more preferably at least 2.0%, and most preferably at least 2.5%. The modulus of the resin is at least 2.0 GPa, preferably at least 2.5 GPa, more preferably at least 3.0 GPa, and most preferably at least 3.5 GPa. The tensile strength should preferably be at least 30, preferably at least 40, more preferably at least 50 MPa, and most preferably at least 60 MPa.

### SUMMARY

The present invention provides a resin composition that addresses one or more of the issues above. Preferred embodiments of the invention also address one or more of the issues above.

It is an object of the invention to provide a curable resin composition, which may be improved with respect to VOC emissions, whilst maintaining adequate performance with respect to cure and mechanical properties of the cured object.

It is another object of the present invention to provide styrene-free or low styrene unsaturated polyester resin compositions which have low emissions from VOC or hazardous air pollutants (HAP), particularly when these resin compositions are used in open moulding applications.

It is another object of the present invention to provide unsaturated polyester resin compositions with a sufficiently fast curing time. Preferably, the hardness according ASTM-648 using a Barcol 934.1 testing device, of the product should be more than 10, more preferably it should be more than 20 as read on the scale of said device. Once sufficient hardness is achieved, the made part can be removed from the mould. Preferably, the required hardness is reached after 24 hours, more preferably after 16 hours, still more preferably after 4 hours and most preferably after 2 hours, preferably depending on the desired demoulding time.

It is another object of the present invention to provide unsaturated polyester resin compositions that provide tack-free surfaces within 24 hours after curing is initiated, preferably both on the surface in contact with the mould and on the surface in contact with the atmosphere when an open mould is used.

It is another object of the present invention to provide unsaturated polyester resin compositions with a sufficiently high HDT; preferably the HDT is at least 55°C, and more preferably at least 60 °C.

It is another object of the present invention to provide unsaturated polyester resin compositions for structural resins and gel coat resins.

It is another object of the present invention to provide unsaturated polyester resin compositions without CMR labelling.

These and other objects, features and advantages of this invention will become apparent from the following detailed description.

An aspect of the invention provides an unsaturated polyester resin composition, comprising:
- a (meth)acrylate compound, and optionally an itaconate compound; and,
- a polyester formed from at least:
   - reagent a) comprising itaconic acid and/or itaconic anhydride;
   - reagent b) comprising maleic acid, maleic anhydride, and/or fumaric acid;
   - reagent c) comprising dicyclopentadiene (DCPD); and,
   - reagent d) comprising at least one di- or poly-functional alcohol;
wherein the combined weight of reagent a) is at least 10 wt.%, preferably at least 20 wt.%, of the total weight of di-acids and anhydrides used in the unsaturated polyester resin composition.

In some embodiments, a reaction mixture is formed from reagent b), reagent c), and optionally reagent a), before the polyester is formed. In embodiments where a reaction mixture is formed from reagent b) and reagent c), the polyester will be formed from the obtained reaction mixture and reagent a) and reagent d). In embodiments where a reaction mixture is formed from reagent b) reagent c) and reagent a), the polyester will be formed from the obtained reaction mixture and reagent d).

In some embodiments, the weight of volatile organic compounds (VOC) is less than 10 wt.% of the total weight of the unsaturated polyester resin composition; preferably less than 5 wt.%, even more preferably less than 2 wt.%, and even more preferably less than 1 wt.%. In some embodiments, the combined weight of styrene, alfa-methyl styrene, vinyltoluene, and/or methyl methacrylate is less than 10 wt.% of the total weight of the unsaturated polyester resin composition; preferably less than 5 wt.%, even more preferably less than 2 wt.%, and even more preferably less than 1 wt.%. Preferably, the vapour pressure of the diluents is below 100 Pa (at 20°C), more preferably below 10 Pa (at 20°C).

In some embodiments, the weight of (meth)acrylate compound is at least 5 to at most 95 wt.% of the total weight of the unsaturated polyester resin composition; preferably 10 to 70 wt.%, more preferably 20 to 60 wt.%, most preferably 30 to 50 wt.%, for example 40 wt.%. Methacrylates are preferred over acrylates in view of the significant differences in skin sensitizing properties.

In some embodiments, the (meth)acrylate compound in the unsaturated polyester resin composition functions as a diluent, preferably a reactive diluent.

In some embodiments, the unsaturated polyester resin composition comprises an itaconate compound, preferably a dialkyl itaconate, more preferably dimethyl itaconate (DMI).

In some embodiments, the unsaturated polyester resin composition comprises dimethyl itaconate or another itaconate monomer, preferably as a diluent, more preferably a reactive diluent. The itaconate monomer can be used alone or in combination with methacrylate and/or acrylate diluents.

In some embodiments, the combined weight of itaconate compound and (meth)acrylate compound is at least 5 to at most 95 wt.% of the total weight of the unsaturated polyester resin composition; preferably 10 to 70 wt.%, more preferably 20 to 60 wt.%, most preferably 30 to 50 wt.%, for example 40 wt.%.. Any ratio between itaconate and (meth)acrylate compound can be used, yet preferably at least 1/4 of the weight amount of diluent is a (meth)acrylate compound, more preferably at least 1/3 of the weight amount of diluent is a (meth)acrylate compound, and most preferably at least 1/2 of the weight amount of diluent is a (meth)acrylate compound.

In some embodiments, the added weight of DCPD is at least 10 wt.% of the total weight of the polyester.

In some embodiments, the unsaturated polyester resin composition comprises a transition metal salt or transition metal complex. In some embodiments, the unsaturated polyester resin composition comprises cobalt salt or cobalt polymer.

In some embodiments, the unsaturated polyester resin composition comprises a photoinitiator. In some embodiments, the unsaturated polyester resin composition comprises inorganic filler.

A further aspect of the invention provides use of an unsaturated polyester resin composition described herein, or embodiments thereof, as a building material for a structural part, preferably in an open mould. A further aspect of the invention provides use of a resin described herein, or embodiments thereof, as a gel coating formulation or coating formulation, preferably in an open mould.

In yet another aspect the invention provides in a method for preparing an unsaturated polyester resin composition, preferably the unsaturated polyester resin composition according to an embodiment of the invention, the method comprising the steps of:
- forming a polyester from at least:
   - reagent a) comprising itaconic acid and/or itaconic anhydride;
   - reagent b) comprising maleic acid, maleic anhydride, and/or fumaric acid;
   - reagent c) comprising dicyclopentadiene (DCPD); and,
   - reagent d) comprising at least one di- or poly-functional alcohol;
- mixing the obtained polyester obtained with a (meth)acrylate compound, and optionally with an itaconate compound, thereby obtaining the unsaturated polyester resin composition;
wherein the combined weight of reagent a) is at least 10 wt.%, preferably at least 20 wt.%, of the total weight of di-acids and anhydrides used in the unsaturated polyester resin composition.

In some embodiments, the method comprises the step of forming a reaction mixture from reagent b), reagent c), and optionally reagent a), before forming the polyester. In embodiments where a reaction mixture is formed from reagent b) and reagent c), the polyester will be formed from the obtained reaction mixture and reagent a) and reagent d). In embodiments where a reaction mixture is formed from reagent b) reagent c) and reagent a), the polyester will be formed from the obtained reaction mixture and reagent d).

Preferred of embodiments of the resins described herein are also preferred embodiments for the uses and methods, and vice versa.

### DESCRIPTION OF THE INVENTION

As used below in this text, the singular forms "a", "an", "the" include both the singular and the plural, unless the context clearly indicates otherwise.

The terms "comprise", "comprises" as used below are synonymous with "including", "include" or "contain", "contains" and are inclusive or open and do not exclude additional unmentioned parts, elements or method steps. Where this description refers to a product or process which "comprises" specific features, parts or steps, this refers to the possibility that other features, parts or steps may also be present, but may also refer to embodiments which only contain the listed features, parts or steps.

The enumeration of numeric values by means of ranges of figures comprises all values and fractions in these ranges, as well as the cited end points.

The term "approximately" as used when referring to a measurable value, such as a parameter, an amount, a time period, and the like, is intended to include variations of +/-10% or less, preferably +/-5% or less, more preferably +/-1% or less, of and from the specified value, in so far as the variations apply to the invention disclosed herein. It should be understood that the value to which the term "approximately" refers per se has also been disclosed.

Unless defined otherwise, all terms disclosed in the invention, including technical and scientific terms, have the meaning which a person skilled in the art usually gives them. For further guidance, definitions are included to further explain terms which are used in the description of the invention.

The present invention generally provides unsaturated polyester resin compositions which are improved with respect to their surface curing properties. The resin compositions of this invention may in particular exhibit efficient cure in a thin laminate under an air atmosphere at ambient temperatures. In addition, the present invention generally provides unsaturated polyester resins which have a good balance in tensile strength, elongation at break, HDT, surface hardness, processing characteristics, and ease of production.

Further, the present invention provides styrene-free or low styrene unsaturated polyester resin compositions which may have low emissions from VOC or hazardous air pollutants (HAP), especially when these resin compositions are used in open-air such as with open moulding applications.

An aspect of the invention provides an unsaturated polyester resin composition comprising:
- a (meth)acrylate compound; and,
   - a polyester formed from at least:
      - reagent a) comprising itaconic acid and/or itaconic anhydride;
      - reagent b) comprising maleic acid, maleic anhydride, and/or fumaric acid;
      - reagent c) comprising dicyclopentadiene (DCPD); and,
      - reagent d) comprising at least one di- or poly-functional alcohol, preferably at least one diol;
wherein the combined weight of reagent a) (*i.e.* the combined weight of itaconic acid and/or itaconic anhydride) is at least 10 wt.%, preferably at least 20 wt.% of the total weight of di-acids and anhydrides used in the unsaturated polyester resin composition.

The presence of DCPD-residues in the unsaturated polyester is beneficial for the surface cure. The DCPD also helps for the surface cure of resin compositions with (meth)acrylate compounds as reactive diluents, yet on its own it is not effective enough to fully compensate for the much poorer starting position of resin compositions with non-volatile reactive diluents, compared to styrene-rich resin compositions. Though, after 24 hours the resin surface may feel dry to the touch, the top layer is still under-cured and remains soft. Surprisingly, it has been found that incorporation of itaconic residues and maleic residues or fumaric residues in a DCPD-polyester resin provides for a synergetic effect that gives significant improvements in the hardness of the resin surface.

Furthermore, the polyester is found to be beneficial for viscosity of the uncured resin compositions, and after cure it enables good mechanical properties of cured resins, heat distortion temperature, and low water absorption. Aforementioned properties depend also strongly on the selection of the reactive diluent, yet it has been found that polyesters used in the invention give a better compromise between aforementioned properties than traditional polyester backbones in the same reactive diluents.

The term "the combined weight of itaconic acid and itaconic anhydride" refers to the sum of the weight of, if used, all the itaconic acid and, if used, all the itaconic anhydride for forming the unsaturated polyester resin composition.

In some embodiments, a reaction mixture is formed from reagent b), reagent c) and optionally reagent a), before the polyester is formed.

In embodiments, it should be noted that the polyester is formed from all four reagents a), b) c) and d), even in the case the reaction mixture is formed only from reagents b) and c). If the reaction mixture is formed from only two of the three reagents b) and c), then the reagent a) and d) will be added to the reaction mixture to form the polyester.

In some embodiments, the reaction mixture is formed from:
- reagent b) and reagent c); or,
- reagent a), reagent b) and reagent c).

In some embodiments, the reaction mixture is formed in the presence of water, especially when the reagents comprise an anhydride.

In some embodiments, prior to the formation of a reaction mixture, the anhydrides present in reagent a) and/or reagent b) are hydrolysed. Preferably, water is added to the reagents comprising anhydrides and the reagents are heated.

In some embodiments, during the formation of the polyester, water is removed, preferably by distillation.

The following resin combinations comprising a (meth)acrylate and/or itaconate containing compound as diluent are examples of the present invention: (i) an unsaturated polyester resin comprising itaconic residues, maleic residues, and DCPD residues; (ii) an unsaturated polyester resin comprising itaconic residues, fumaric residues, and DCPD residues.

Preparation of DCPD-maleate polyesters may be known to the person skilled in the art. However, the method of the invention may differ from the standard practices in the form that itaconic acid is added in the DCPD addition step or in the polycondensation step. In some embodiments, the added weight of DCPD is at least 10 wt.% of the total weight of the polyester.

In some embodiments, the preferred method comprises heating a mixture of maleic anhydride, water, and optionally itaconic acid to about 130-140°C, during which the maleic anhydride reacts with water to form maleic acid. Preferably a clear solution is formed, though a well flowing slurry with solid itaconic acid is also acceptable. To this mixture DCPD is added, which gives an exothermic reaction. The addition rate of the DCPD is preferably controlled such that the temperature does not increase above 150°C, or preferably not above 140°C in order to avoid dangerous decomposition reactions. In alternative procedures, DCPD is part of the starting mixture and water or maleic anhydride is added in a controlled rate. After the acids, water, and DCPD all are added the mixture needs to react for another hour or longer at 130-150°C to get sufficient conversion.

Preferably, the initial mix to which the DCPD is added comprises maleic acid, water, and itaconic acid.

More preferably, the ratio between maleic acid and itaconic acid is between 1:4 and 2:1. Most preferably, the ratio is between 1:2 and 1.5:1.

Alternatively, first a DCPD-maleate is made using a standard procedure and itaconic acid is added later in which the ratio between maleic acid and itaconic acid is between 1:4 and 2:1. Most preferably, the ratio is between 1:2 and 1.5:1.

In some embodiments, the next step is the polycondensation step for which diols and/or glycols, and optionally additional itaconic acid or other di-acids or anhydrides, are added. For the polycondensation process, various methods are known in the art.

In some embodiments, all reactants are heated together to 150-250°C upon which water is removed, preferably by distillation, and a polymer is formed.

In some embodiments, the method comprises flushing the mixture during polycondensation with an inert gas, such as nitrogen, and/or reducing the pressure in the reactor. This allows for more efficient water removal.

In some embodiments, toluene is added to enhance water removal through azeotropic distillation. This process can be executed at lower temperatures like 100-120°C facilitating the polycondensation with thermal labile components. Also other inert solvents that form an azeotrope with water can be used.

In some embodiments, the combined amount of DCPD and hydroxyl groups should be near equal to the amount of acid groups on a molar basis. Near equal implies that the amount of DCPD+hydroxyl groups is 80-120%, preferably 110-90%, and most preferably 110-100% of the amount of acid groups.

In some embodiments, for smooth processing of unsaturated polyester resin, the viscosity should be preferably 100-2000 mPa.s, more preferably 150-1000 mPa.s, and most preferably 200-600 mPa.s at 23°C. In certain embodiments, rheological additives for creating thixotropy are used.

In some embodiments, for initiating the cure, methods that are known in the art can be used. This may include peroxide-accelerator systems, UV-cure, thermal initiators, and/or an electron beam. Examples that are more specific are MEKP peroxides in combination with cobalt and/or other accelerators and BPO-amine initiators.

In some embodiments, the polycondensation is boosted by the addition of catalysts.

In some embodiments, the polycondensation is stopped before full conversion is reached. A common method to determine the conversion is by measuring the acid value according to ISO 2114-2000. In some embodiments, the acid value of the unsaturated polyester resin is preferably in the range from 10 to 100 mg KOH/g resin, more preferably from 15 to 60 mg KOH/g resin, and most preferably from 20 to 50 mg KOH/g resin.

In some embodiments, aside from the above listed di-acids, other di-acids may be included in the resin composition. Typical examples of suitable di-acids and anhydrides may include fumaric acid, citraconic acid, citraconic anhydride, mesaconic acid, oxalic acid, succinic acid, adipic acid, sebacic acid, tetrahydrophthalic acid, phthalic acid, phthalic anhydride, terephthalic acid, and isophthalic acid. Not explicitly mentioned di-acids may be used as well; the present composition is by no means limited to the listed di-acids which merely serve to guide the skilled person. Additionally, mono-acids, tri-acids, and higher acids may also be included in the composition. Typical examples of suitable mono-acids may include (meth)acrylic acid, lactic acid, benzoic acid, and so on.

In some embodiments, a di- or poly-functional alcohol is used for the polymerisation process. Preferably, a diol is used such as for example 1,2-propylene glycol, ethylene glycol, diethylene glycol, triethylene glycol, 1,3-propylene glycol, dipropylene glycol, tripropylene glycol, neopentyl glycol, 2-methyl-1,3,-propylene glycol, isosorbide, 2,3-butanediol, butyl ethyl propanediol, hydrogenated bisphenol-A, or ethoxylated/propoxylated bisphenol A. In some embodiments, in addition to the di- or poly-functional alcohol, mono-alcohols like 2-ethylhexanol or benzylalcohol and polyols like glycerol or trimethylolpropane can be used. In some embodiments, other mono-, di, and polyalcohols can be used as well.

In some embodiments, the polyester may be made with a single diol, or with a combination of diols and/or mono- and polyalcohols.

In some embodiments, inhibitors that prevent radical polymerization may be added during the polycondensation. For example, the unsaturated polyester resin may be prepared in the presence of hydroquinone, 2-methylhydroquinone, benzoquinone, 2-methylbenzoquinone, or other substituted hydroquinones or quinones as inhibitor.

In some embodiments, esterification catalysts and/or isomerization catalysts may be used during the polycondensation.

In some embodiments, the non-volatile diluent is selected from the groups of acrylates and methacrylates. Of these two groups, methacrylates are preferred as acrylates, since these typically are much stronger skin sensitizers and consequently require more worker protection.

In some embodiments, after making the DCPD modified polyester, the polyester can be diluted in a reactive diluent. As suitable diluents all (meth)acrylates that are available in the trade can be used. Examples of such (meth)acrylates may include hydroxyethyl methacrylate (HEMA), hydroxypropyl methacrylate (HPMA), hydroxyethyl acrylate (HEA), hydroxypropyl acrylate (HPA), Glycerol formal (meth)acrylate, butyl methacrylate, hexyl (meth)acrylate, tert-butyl methacrylate, benzyl (meth)acrylate, cyclohexyl (meth)acrylate, tert-butyl cyclohexyl (meth)acrylate, tetrahydro furfuryl (meth)acrylate, trimethylolpropane tri(meth)acrylate, PEG200 di(meth)acrylate, 1,4-butanediol di(meth)acrylate, 1,3-butanediol di(meth)acrylate, 2,3-butanedioldi(meth)acrylate, 1,6-hexanediol di(meth)acrylate and its isomers, ethyleneglycol di(meth)acrylate, diethyleneglycol di(meth)acrylate, triethyleneglycol di(meth)acrylate, glycerol di(meth)acrylate, trimethylolpropane di(meth)acrylate, neopentyl glycol di(meth)acrylate, dipropyleneglycol di(meth)acrylate, tripropyleneglycol di(meth)acrylate, PPG250 di(meth)acrylate, tricyclodecane dimethylol di(meth)acrylate, 1,10-decanediol di(meth)acrylate and/or tetraethylene glycol dimethacrylate. Preferred difunctional reactive diluents are 1,4-butanediol di(meth)acrylate, neopentylglycol di(meth)acrylate, PEG400 di(meth)acrylate, triethyleneglycol di(meth)acrylate and/or tripropylene glycol di(meth)acrylate.

In some embodiments, in addition to the (meth)acrylates, also itaconate diluents like dimethyl itaconate, diethyl itaconate, diispopropylitaconate, di-n-propylitaconate, and dibutyl itaconate can be used. Of these diluents, dimethylitaconate is preferred. Preferably, itaconate diluents are used in combination with (meth)acrylate diluents. More preferably, itaconate diluents are used in combination with methacrylate diluents

In some embodiments, the combined amount of (meth)acrylate and itaconate diluents is at least 5 to at most 95 wt.% of the total amount of unsaturated polyester resin composition; preferably 10 to 70 wt.%, more preferably 20 to 60 wt.%, most preferably 30 to 50 wt.%, for example 40 wt.%. Preferred concentration of multifunctional (meth)acrylate in the present invention is at least 5 to at most 95 % by weight of the total amount of unsaturated polyester resin composition; preferably 5 to 85 wt.%, more preferably 5 to 80 wt.%, even more preferably 5 to 75 wt.%, even more preferably 5 to 70 wt.%, even more preferably 5 to 65 wt.%, even more preferably 5 to 60 wt.%, more preferably 10 to 60 wt.%, even more preferably 20 to 60% wt.%, for example 20 wt.%, for example 25 wt.%, for example 30 wt.%, for example 35 wt.%, for example 40 wt.%, for example 45 wt.%, for example 50 wt.%, for example 55 wt.%. These amounts may refer to a single reactive diluent or to the total amount of a combination of two or more reactive diluents.

Although low volatile diluents are preferred, in some embodiments, low amounts of volatile diluents may be present. The low amounts preferably are less than 10.0% of the total formulation, more preferably less than 5.0%, even more preferably less than 2.0% and even more preferably less than 1.0%. Examples of volatile diluents are styrene, alfa-methyl styrene, vinyl toluene, and methyl methacrylate. Therefore, in some embodiments, the amount of volatile organic compounds (VOC) is less than 10 wt.% of the total amount of unsaturated polyester resin composition; preferably less than 5 wt.%, even more preferably less than 2 wt.%, and even more preferably less than 1 wt.%. More in particular, in some embodiments, the amount of styrene, alfa-methyl styrene, vinyltoluene, and/or methyl methacrylate is less than 10 wt.% of the total amount of unsaturated polyester resin composition; preferably less than 5 wt.%, even more preferably less than 2 wt.%, and even more preferably less than 1 wt.%.

In some embodiments, the unsaturated polyester resin composition may further comprise various additives such as inhibitors, accelerators, promotors, fillers, pigments, dyes, UV-stabilizers, thixotropic agents, defoamers, photoinitiators, and/or other additives. Suitable compounds may be found listed further below.

In some embodiments, the unsaturated polyester resin composition may comprise an accelerator. As accelerators, typically transition metal compounds are used such as vanadium, iron, manganese, copper, nickel, molybdenum, tungsten, cobalt, and chromium compounds. Preferred transition metals are V, Cu, Co, Mn and Fe. The transition metals may be present as a carboxylate salt, as a polymer, or complexed with a ligand. Examples of such complexes are Borchi OxyCure^{™}, DriCat^{®} 2700F and Nuodex DryCoat. The accelerator may be based on one transition metal or on a combination of multiple transition metals.

In some embodiments, the unsaturated polyester resin composition may comprise a promotor. Examples of promotors are acetylacetone, N,N-dimethylacetoacetamide, N,N-diethylacetoacetamide, acetylesters, and aromatic amines like N,N-dimethylaniline, N,N-diethylaniline, toluidines and xylidines such as N,N-diisopropanol-para-toluidine; N,N-dimethyl-p-toluidine; N,N-bis(2-hydroxyethyl)xylidine and -toluidine. In addition, alkali and alkaline salts may be added.

In some embodiments, the unsaturated polyester resin composition may further comprise radical inhibitors. These radical inhibitors are preferably chosen from the group consisting of phenolic compounds, benzoquinones, hydroquinones, catechols, stable radicals and/or phenothiazines. The amount of radical inhibitor that can be added may vary within rather wide ranges, and may be chosen as a first indication of the gel time as is desired to be achieved.

Suitable examples of radical inhibitors that can be used in embodiments of the unsaturated polyester resin composition are, for instance, 2-methoxyphenol, 4-methoxyphenol, 2,6-di-t-butyl-4-methylphenol, 2,6-di-t-butylphenol, 2,4,6-trimethyl-phenol, 2,4,6-tris-dimethylaminomethyl phenol, 4,4'-thio-bis(3-methyl-6-t-butylphenol), 4,4'-isopropylidene diphenol, 2,4-di-t-butylphenol, 6,6'-di-t-butyl-2,2'-methylene di-p-cresol, hydroquinone, 2-methylhydroquinone, 2-t-butylhydroquinone, 2,5-di-t-butylhydroquinone, 2,6-di-t-butylhydroquinone, 2,6-dimethylhydroquinone, 2,3,5-trimethylhydroquinone, catechol, 4-t-butylcatechol, 4,6-di-t-butylcatechol, benzoquinone, 2,3,5,6-tetrachloro-1,4-benzoquinone, methylbenzoquinone, 2,6-dimethylbenzoquinone, napthoquinone, 1-oxyl-2,2,6,6-tetramethylpiperidine, 1-oxyl-2,2,6,6-tetramethylpiperidine-4-ol (a compound also referred to as TEMPOL), 1-oxyl-2,2,6,6-tetramethylpiperidine-4-one (a compound also referred to as TEMPON), 1-oxyl-2,2,6,6-tetramethyl-4-carboxyl-piperidine (a compound also referred to as 4-carboxy-TEMPO), 1-oxyl-2,2,5,5-tetramethylpyrrolidine, 1-oxyl-2,2,5,5-tetramethyl-3-carboxylpyrrolidine (also called 3-carboxy-PROXYL), galvinoxyl, aluminium-N-nitrosophenyl hydroxylamine, diethylhydroxylamine, phenothiazine and/or derivatives or combinations of any of these compounds.

In some embodiments, the amount of radical inhibitor in the unsaturated polyester resin composition, relative to the total amount of unsaturated polyester and reactive diluent present in the unsaturated polyester resin composition is in the range of from 0.0001 to 10.0 % by weight. More preferably, the amount of inhibitor in the unsaturated polyester resin composition is in the range of from 0.001 to 1.0 % by weight. The skilled person can quite easily assess, in dependence of the type of inhibitor selected, which amount thereof leads to good results according to the invention.

The present invention further relates to a process for radically curing the unsaturated polyester resin composition according to the invention, wherein the curing is effected by adding and activating an initiator to the resin composition as described above. Preferably, the curing is effected at a temperature in the range of from -20 to +200 °C, preferably in the range of from -20 to +100 °C, and most preferably in the range of from -10 to +60 °C (so-called cold curing).

In some embodiments, the initiator may be a photoinitiator, a thermal initiator or redox initiator, and/or combinations thereof.

As meant herein, a photoinitiator is capable of initiating curing upon irradiation. Photo initiation is understood to be curing using irradiation with light of a suitable wavelength (photo irradiation). This is also referred to as light cure.

In some embodiments, a sensitizer may be added to the photoinitiator forming a photo-initiating system

In some embodiments, a mixture of photoinitiators may be used, optionally in combination with one or more sensitizers.

In some embodiments, the photo initiating system can be chosen from the large group of photo-initiating systems known to the skilled person. A vast number of suitable photo initiating systems, can be found in, for instance, Volume 3 of " Chemistry and Technology of UV and EB Formulations", 2nd Edition, by K. Dietliker and J. V. Crivello (SITATechnology, London; 1998).

In some embodiments, the thermal initiator can be selected from azo compounds, like for example azo isobutyronitril (AIBN), C-C labile compounds, like for example benzopinacole, peroxides, and mixtures thereof. In some embodiment, the thermal initiator is preferably an organic peroxide, or a combination of two or more organic peroxides.

In some embodiments, the redox initiator is preferably an organic peroxide in combination with at least one of the above mentioned co-initiators. Examples of suitable peroxides are, for instance, hydroperoxides, peroxy carbonates (of the formula -OC(O)OO-), peroxyesters (of the formula - C(O)OO-), diacylperoxides (of the formula -C(O)OOC(O)-), dialkylperoxides (of the formula -OO-), etc. The present invention further also relates to cured objects or structural parts prepared from unsaturated polyester resin compositions as described above, by curing with an initiator as described above.

In some embodiments, the surface curing is performed in open-air such as for open moulding applications.

As used herein, "structural resins" or "structural resin compositions" are capable of providing structural parts which are suitable to be applied for construction purposes. Preferably such resin compositions are non-aqueous systems. Preferably, they may contain at most 5% by weight of water, mainly resulting from the reactions during resin preparation. As meant herein, "structural parts" are considered to have a thickness of at least 0.5 mm and appropriate mechanical properties after curing.

End segments where the resin compositions according to the present invention can be applied are for example automotive parts, boats, chemical anchoring, roofing, construction, containers, relining, pipes, tanks, flooring, windmill blades.

The present invention further also relates to gel coating formulations prepared from unsaturated polyester resin compositions as described above. The gel coats may be applied in an open mould.

A further aspect of the invention provides use of an unsaturated polyester resin composition described herein, or embodiments thereof, for making a structural part in an open mould.

A further aspect of the invention provides a structural part prepared with an unsaturated polyester resin composition described herein, or embodiments thereof, preferably in an open mould.

A further aspect of the invention provides use of an unsaturated polyester resin composition described herein, or embodiments thereof, for making a gel coat formulation.

A further aspect of the invention provides use of an unsaturated polyester resin composition described herein, or embodiments thereof, for applying a gel coat in an open mould.

A further aspect of the invention provides a gelcoat formulation comprising an unsaturated polyester resin composition described herein, or embodiments thereof, preferably applied in an open mould.

A further aspect of the invention provides a method for preparing an unsaturated polyester resin composition, preferably the unsaturated polyester resin composition according to an embodiment described herein, comprising the steps of:
- forming a polyester from at least:
   - reagent a) comprising itaconic acid and/or itaconic anhydride;
   - reagent b) comprising maleic acid, maleic anhydride, and/or fumaric acid;
   - reagent c) comprising dicyclopentadiene (DCPD); and,
   - reagent d) comprising at least one di- or poly-functional alcohol;
- mixing the obtained polyester obtained with a (meth)acrylate compound, and optionally with an itaconate compound, providing the unsaturated polyester resin composition;
wherein the combined weight of reagent a) is at least 10 wt.%, preferably at least 20 wt.% of the total weight of di-acids and anhydrides used in the unsaturated polyester resin composition.

In some embodiments, the method comprises the step of forming a reaction mixture from reagent b), reagent c) and optionally reagent a), before forming the polyester. In embodiments where a reaction mixture is formed from reagent b) and reagent c), the polyester will be formed from the obtained reaction mixture and reagent a) and reagent d). In embodiments where a reaction mixture is formed from reagent b) reagent c) and reagent a), the polyester will be formed from the obtained reaction mixture and reagent d).

In some embodiments, water is added to reagent a) and/or b), especially when reagent a) or b) comprises an anhydride.

In some embodiments, the unsaturated polyester resin composition may comprise any suitable compounds listed as embodiments of the unsaturated polyester resin composition above.

In some embodiments, the reaction mixture may comprise inhibitors.

In some embodiments, one may form the reaction mixture in absence of reagent a), and add the reagent a) together with reagent d) to form the polyester. Also in these embodiments, the combined weight of itaconic acid and itaconic anhydride is at least 10 wt.%, preferably at least 20 wt.% of the total weight of di-acids and anhydrides used in the unsaturated polyester resin composition.

In some embodiments, reagent c) is added to reagent a) and/or b) to form the reaction mixture, preferably reagents a) and/or reagent b) are hydrolysed before reagent c) is added, if reagent a) and/or b) comprise an anhydride. This allows to control the reaction, and to control the amount of heat generated during the reaction.

In some embodiments, reagent a) and/or reagent b) is/are added to reagent c) to form the reaction mixture, preferably reagents a) and/or reagent b) are hydrolysed before they are added to reagent c), if reagent a) and/or b) comprise an anhydride. This method provides resins with similar chemical and physical properties, yet this method is less preferred as it is less safe.

In some embodiments, reagents a) and/or reagent b) are hydrolysed by heating to a temperature of at least 130°C to at most 140°C, preferably 135°C in the presence of water prior to the formation of the reaction mixture.

In some embodiments, the one or more diols are for example propylene glycol, neopentyl glycol, and/or diethylene glycol.

In some embodiments, the formed structural unit according to the above described method may be:

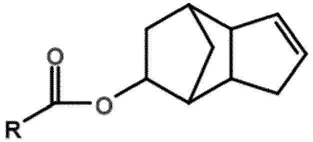

The invention will be further illustrated by following non-limiting examples.

### EXAMPLES

### Used methods

For testing of the mechanical properties and HDT of cured resins, samples were prepared according the following method: moulds were made from two glass plates with wax and 4 mm thick rubber spacers. The to-be-tested resins were well mixed with 0.1% Byk 555 (air release agent), 1.0% Accelerator NL-49P (Nouryon), and 1.5% Butanoc M-50, degassed, and poured in the moulds. After 24 hours the cured resins were demoulded and given a post cure for 24 hours at 80°C.

The tensile properties were measured following ISO 527-2.

The Heat Deflection Temperature (HDT) was measured following ISO 75-A.

### Experiment 1: Preparation of DCPD-polyester A (example 1)

Backbone A was prepared according the following procedure:
In a vessel equipped with a packed column, a temperature measurement device and inert gas inlet a mixture of maleic anhydride (10.0 mol), itaconic acid (10.0 mol), water (10 mol), and inhibitors were heated to 135-140°C. To this mixture DCPD (8.0 mol) was added at a controlled rate to avoid a temperature raise due to the reaction exotherm; the addition took about 30 minutes. Under these conditions, DCPD reacts with the acid groups of maleic acid and itaconic acid forming DCPD-maleate and DCPD-itaconate esters. After the DCPD addition was complete, the mixture was left for one hour at 135-140°C and subsequently neopentyl glycol (13.0 mol) and propylene glycol (4.0 mol) were added. This mixture was heated to a temperature of 140° C, and subsequently in two and a half hours the temperature was increased to 190° C. The mixture was kept at a temperature between 190-200° C until the distillation of water stopped. The packed column was removed and the mixture was kept under reduced pressure (approximately 100 mbar) until the acid value reached a value of about 30-35 mg KOH/g resin. Then the vacuum was relieved with inert gas, and the mixture was cooled.

### Experiment 2: Preparation of DCPD-polyester B (comparative example 1)

Backbone B was prepared according the following procedure:
In a vessel equipped with a packed column, a temperature measurement device and inert gas inlet a mixture of maleic anhydride (20.0 mol), water (10 mol), and inhibitors were heated to 135-140°C. To this mixture, DCPD (8.0 mol) was added at a controlled rate to avoid a temperature raise due to the reaction exotherm, the addition took about 30 minutes. Under these conditions DCPD reacts with the acid groups of maleic acid forming DCPD-maleate. After the DCPD addition was complete, the mixture was left for one hour at 135-140°C and subsequently neopentyl glycol (13.0 mol) and propylene glycol (4.0 mol) were added. This mixture was heated to a temperature of 140° C and subsequently in two and a half hours the temperature was increased to 190° C. The mixture was kept at a temperature between 190-200° C until the distillation of water stopped. The packed column was removed and the mixture was kept under reduced pressure (approximately 100 mbar) until the acid value reached a value of about 30-35 mg KOH/g resin. Then the vacuum was relieved with inert gas, and the mixture was cooled.

### Experiment 3: Preparation of benzyl alcohol-polyester C (comparative example 2)

Backbone C was prepared according the following procedure:
In a vessel equipped with a packed column, a temperature measurement device and inert gas inlet a mixture of maleic anhydride (10.0 mol), itaconic acid (10 mol), and inhibitors were heated to 135-140°C. To this mixture, benzyl alcohol (8.0 mol) was added and allowed to react for about one hour. Subsequently, neopentyl glycol (13.0 mol) and propylene glycol (4.0 mol) were added. This mixture was heated to a temperature of 140° C and subsequently in two and a half hours the temperature was increased to 190° C. The mixture was kept at a temperature between 190-200° C until the distillation of water stopped. The packed column was removed and the mixture was kept under reduced pressure (approximately 100 mbar) until the acid value reached a value of about 30-35 mg KOH/g resin. Then the vacuum was relieved with inert gas, and the mixture was cooled.

### Experiment 4: Preparation of DCPD-polyester D (example 2)

Backbone D was prepared according the following procedure:
In a vessel equipped with a packed column, a temperature measurement device and inert gas inlet a mixture of maleic anhydride (8.0 mol), itaconic acid (12.0 mol), water (10 mol), and inhibitors were heated to 135-140°C. To this mixture DCPD (8.0 mol) was added at a controlled rate to avoid a temperature raise due to the reaction exotherm; the addition took about 30 minutes. Under these conditions, DCPD reacts with the acid groups of maleic acid and itaconic acid forming DCPD-maleate and DCP-itaconate esters. After the DCPD addition was complete, the mixture was left for one hour at 135-140°C, and subsequently neopentyl glycol (8.8 mol) and propylene glycol (8.8 mol) were added. This mixture was heated to a temperature of 140° C, and subsequently in two and a half hours the temperature was increased to 190° C. The mixture was kept at a temperature between 190-200° C until the distillation of water stopped. The packed column was removed and the mixture was kept under reduced pressure (approximately 100 mbar) until the acid value reached a value of about 30-35 mg KOH/g resin. Then the vacuum was relieved with inert gas, and the mixture was cooled.

### Experiment 5: Preparation of DCPD-polyester E (example 3)

Backbone E was prepared according the following procedure:
In a vessel equipped with a packed column, a temperature measurement device and inert gas inlet a mixture of maleic anhydride (4.0 mol), itaconic acid (16.0 mol), water (10 mol), and inhibitors were heated to 135-140°C. To this mixture DCPD (12.0 mol) was added at a controlled rate to avoid a temperature raise due to the reaction exotherm; the addition took about 30 minutes. Under these conditions, DCPD reacts with the acid groups of maleic acid and itaconic acid forming DCPD-maleate and DCP-itaconate esters. After the DCPD addition was complete, the mixture was left for one hour at 135-140°C, and subsequently neopentyl glycol (12.0 mol) and diethylene glycol (4.0 mol) were added. This mixture was heated to a temperature of 140° C, and subsequently in two and a half hours the temperature was increased to 190° C. The mixture was kept at a temperature between 190-200° C until the distillation of water stopped. The packed column was removed and the mixture was kept under reduced pressure (approximately 100 mbar) until the acid value reached a value of about 30-35 mg KOH/g resin. Then the vacuum was relieved with inert gas, and the mixture was cooled. This experiment shows that a large excess of DCPD can be used compared to the amount of maleic acid.

### Experiment 6 (comparative example 3)

In a vessel equipped with a packed column, a temperature measurement device and inert gas inlet it was attempted to heat a mixture of itaconic acid, inhibitors, and water to 135-140°C. With equimolar amounts of itaconic acid and water the mixture remained solid which made effective stirring impossible. By increasing the amount of water a suspension that could be stirred could be made, yet in this case the water started boiling at <110°C. Consequently, when starting with only itaconic acid, inhibitors, and water the required conditions for a safe DCPD addition could not be reached.

### Experiment 7 (comparative example 4)

In a vessel equipped with a packed column, a temperature measurement device and inert gas inlet a mixture of 5 mol itaconic acid, 1 mol neopentyl glycol, 1 mol diethylene glycol, inhibitors, and water was heated to 135-140°C. To this suspension, in about 40 minutes 3 mol DCPD was added. Unlike in the experiments in which maleic acid was present, now no reaction exotherm was observed. After the addition was complete, the mixture was kept at 135-140°C for another two hours. Unlike in the experiments in which maleic acid was present, the mixture remained turbid and after stopping the stirring the mixture separated into two layers of which one was a layer of unreacted DCPD and the experiment was stopped. This experiment shows that the presence of maleic acid is needed for a successful DCPD addition to itaconic acid.

### Experiment 8

The backbones from experiments 1-3 were diluted in a combination of triethyleneglycol dimethacrylate (TRGDMA) and dimethyl itaconate (DMI). To cure these resins, they were mixed with 0.3% cobalt octoate solution (10% Co), 0.1% copper naphthanate solution (8% Cu), 0.5% N.N-diethyl-aceto-acetamide, and 2.0% Butanox LPT-IN. These formulations were poured in open metal moulds to form a layer with a thickness of about 4 mm. After 24 hours the tackiness of the surface was assessed by touch and the Barcol hardness was determined. The results are shown in table 1. Only the resin with Backbone A was cured adequately after 24 hours.

**Table 1**

| | I | II | III |
|---|---|---|---|
| Backbone A | 55% | | |
| Backbone B | | 55% | |
| Backbone C | | | 55% |
| TRGDMA | 22.5% | 22.5% | 22.5% |
| DMI | 22.5% | 22.5% | 22.5% |
| 24h surface | tack-free | tack-free | strong tack |
| Barcol 934.1 | 20 | 0 | 0 |

### Experiment 9

The DCPD-polyesters from experiments 1-5 were diluted with different combinations of different methacrylate compounds and with dimethyl itaconate as diluents. The viscosities of these resins were measured and subsequently the resins were cured with 1.0% Accelerator NL-49P and 1.5% Butanox M-50 (both from Nouryon) and post-cured for 24 hours at 80°C. Subsequently the HDT and tensile properties of these resins were measured. The results in table 2 show that resins according to the invention (backbones A, D, and E) show adequate viscosities, HDT, and tensile properties. The resins with comparative backbone B are high in viscosity and too low in HDT. The resins with comparative backbone C are even lower in HDT and are low in modulus. These trends between the backbones were observed with all tested diluent combinations.

**Table 2**

| | IV | V | VI | VII | VIII | IX | X | XI | XII | XIII | XIV | XV | XVI | XVII | XVIII |
|---|---|---|---|---|---|---|---|---|---|---|---|---|---|---|---|
| Backbone A (wt.%) | 55.0 | | | 50.0 | | | 55.0 | | | 55.0 | | | | | 55.0 |
| Backbone B (wt.%) | | 55.0 | | | 50.0 | | | 55.0 | | | 55.0 | | | | |
| Backbone C (wt.%) | | | 55.0 | | | 50.0 | | | 55.0 | | | 55.0 | | | |
| Backbone D (wt.%) | | | | | | | | | | | | | 55.0 | | |
| Backbone E (wt.%) | | | | | | | | | | | | | | 55.0 | |
| HEMA (wt.%) | 22.5 | 22.5 | 22.5 | | | | | | | | | | | | 15.0 |
| BDDMA (wt.%) | 22.5 | 22.5 | 22.5 | | | | | | | | | | | | 15.0 |
| TRGDMA (wt.%) | | | | | | | 22.5 | 22.5 | 22.5 | | | | | | |
| PEG200DMA (wt.%) | | | | 50.0 | 50.0 | 50.0 | | | | 22.5 | 22.5 | 22.5 | 22.5 | 45.0 | 15.0 |
| DMI (wt.%) | | | | | | | 22.5 | 22.5 | 22.5 | 22.5 | 22.5 | 22.5 | 22.5 | | |
| Viscosity (mPa.s) | 377 | 744 | 155 | 521 | 875 | 250 | 512 | 957 | 202 | 588 | 1173 | 237 | 553 | 436 | 521 |
| HDT (°C) | 65 | 53 | 53 | 57 | 49 | 43 | 60 | 49 | 46 | 54 | 47 | 41 | 56 | 57 | 59 |
| tensile strength (MPa) | 54 | 56 | 35 | 52 | 54 | 26 | 63 | 15 | 31 | 64 | 51 | 27 | 56 | 40 | 48 |
| tensile modulus (GPa) | 3.4 | 3.1 | 1.5 | 2.4 | 2.4 | 1.1 | 3.5 | 3.0 | 1.5 | 3.1 | 3.0 | 1.2 | 2.9 | 2.0 | 2.7 |
| elongation at break (%) | 2.0 | 1.8 | 2.5 | 3.4 | 4.1 | 4.4 | 2.2 | 0.5 | 2.8 | 2.9 | 2.3 | 4.3 | 2.5 | 2.7 | 2.1 |

## Claims

1. An unsaturated polyester resin composition comprising:
- a (meth)acrylate compound; and,
- a polyester formed from at least:
- reagent a) comprising itaconic acid and/or itaconic anhydride;
- reagent b) comprising maleic acid, maleic anhydride, and/or fumaric acid;
- reagent c) comprising dicyclopentadiene (DCPD); and,
- reagent d) comprising at least one di- or poly-functional alcohol;
wherein the combined weight of reagent a) is at least 10 wt.%, preferably at least 20 wt.%, of the total weight of di-acids and anhydrides used in the unsaturated polyester resin composition.

2. The unsaturated polyester resin composition according to claim 1, wherein a reaction mixture is formed from reagent b), reagent c), and optionally reagent a), before the polyester is formed.

3. The unsaturated polyester resin composition according to claim 1 or claim 2, wherein the weight of volatile organic compounds (VOC) is less than 10 wt.% of the total weight of the unsaturated polyester resin composition; preferably less than 5 wt.%, even more preferably less than 2 wt.%, and even more preferably less than 1 wt.%.

4. The unsaturated polyester resin composition according to any one of claims 1 to 3, wherein the combined weight of styrene, alfa-methyl styrene, vinyltoluene, and/or methyl methacrylate is less than 10 wt.% of the total weight of the unsaturated polyester resin composition; preferably less than 5 wt.%, even more preferably less than 2 wt.%, and even more preferably less than 1 wt.%.

5. The unsaturated polyester resin composition according to any one of claims 1 to 4, wherein the weight of (meth)acrylate compound is at least 5 to at most 95 wt.% of the total weight of the unsaturated polyester resin composition; preferably 10 to 70 wt.%, more preferably 20 to 60 wt.%, most preferably 30 to 50 wt.%, for example 40 wt.%.

6. The unsaturated polyester resin composition according to any one of claims 1 to 5, further comprising an itaconate compound, preferably further comprising a dialkyl itaconate, more preferably further comprising dimethyl itaconate (DMI).

7. The unsaturated polyester resin composition according to claim 6, wherein the combined weight of (meth)acrylate compound and itaconate compound is at least 5 to at most 95 wt.% of the total weight of the unsaturated polyester resin composition; preferably 10 to 70 wt.%, more preferably 20 to 60 wt.%, most preferably 30 to 50 wt.%, for example 40 wt.%.

8. The unsaturated polyester resin composition according to any one of claims 1 to 7, wherein the added-weight of DCPD is at least 10 wt.% of the total weight of the polyester.

9. The unsaturated polyester resin composition according to any one of claims 1 to 8, further comprising a transition metal salt or transition metal complex.

10. The unsaturated polyester resin composition according to any one of claims 1 to 9, further comprising a cobalt salt or cobalt polymer.

11. Use of an unsaturated polyester resin composition according to any one of claims 1 to 10, as a building material for a structural part.

12. Use of an unsaturated polyester resin composition according to any one of claims 1 to 10, as a gel coating formulation or coating formulation.

13. Use according to claim 11 or claim 12, in an open mould.

14. A method for preparing an unsaturated polyester resin composition, preferably the unsaturated polyester resin composition according to any one of claims 1 to 10, the method comprising the steps of:
- forming a polyester from at least:
- reagent a) comprising itaconic acid and/or itaconic anhydride;
- reagent b) comprising maleic acid, maleic anhydride, and/or fumaric acid;
- reagent c) comprising dicyclopentadiene (DCPD); and,
- reagent d) comprising at least one di- or poly-functional alcohol;
- mixing the obtained polyester obtained with a (meth)acrylate compound, thereby obtaining the unsaturated polyester resin composition;
wherein the combined weight of reagent a) is at least 10 wt.%, preferably at least 20 wt.%, of the total weight of di-acids and anhydrides used in the unsaturated polyester resin composition.

15. The method according to claim 14, comprising the step of forming a reaction mixture from reagent b), reagent c), and optionally reagent a), before forming the polyester.

## Patentansprüche

1. Ungesättigte Polyesterharzzusammensetzung, umfassend:
- eine (Meth)acrylatverbindung; und
- einen Polyester, gebildet aus wenigstens:
- Reagens a), umfassend Itaconsäure und/oder Itaconsäureanhydrid;
- Reagens b), umfassend Maleinsäure, Maleinsäureanhydrid und/oder Fumarsäure;
- Reagens c), umfassend Dicyclopentadien (DCPD); und
- Reagens d), umfassend wenigstens einen di- oder polyfunktionellen Alkohol;
wobei das kombinierte Gewicht von Reagens a) wenigstens 10 Gew.-%, vorzugsweise wenigstens 20 Gew.-%, des Gesamtgewichts von Disäuren und Anhydriden, die in der ungesättigten Polyesterharzzusammensetzung verwendet werden, beträgt.

2. Ungesättigte Polyesterharzzusammensetzung gemäß Anspruch 1, wobei vor dem Bilden des Polyesters ein Reaktionsgemisch aus Reagens b), Reagens c) und gegebenenfalls Reagens a) gebildet wird.

3. Ungesättigte Polyesterharzzusammensetzung gemäß Anspruch 1 oder Anspruch 2, wobei das Gewicht an flüchtigen organischen Verbindungen (VOC) weniger als 10 Gew.-% des Gesamtgewichts der ungesättigten Polyesterharzzusammensetzung beträgt; vorzugsweise weniger als 5 Gew.-%, noch bevorzugter weniger als 2 Gew.-% und noch bevorzugter weniger als 1 Gew.-%.

4. Ungesättigte Polyesterharzzusammensetzung gemäß einem der Ansprüche 1 bis 3, wobei das kombinierte Gewicht von Styrol, alpha-Methylstyrol, Vinyltoluol und/oder Methylmethacrylat weniger als 10 Gew.-% des Gesamtgewichts der ungesättigten Polyesterharzzusammensetzung beträgt; vorzugsweise weniger als 5 Gew.-%, noch bevorzugter weniger als 2 Gew.-% und noch bevorzugter weniger als 1 Gew.-%.

5. Ungesättigte Polyesterharzzusammensetzung gemäß einem der Ansprüche 1 bis 4, wobei das Gewicht an (Meth)acrylatverbindung wenigstens 5 bis höchstens 95 Gew.-% des Gesamtgewichts der ungesättigten Polyesterharzzusammensetzung beträgt; vorzugsweise 10 bis 70 Gew.-%, bevorzugter 20 bis 60 Gew.-%, höchst bevorzugt 30 bis 50 Gew.-%, beispielsweise 40 Gew.-%.

6. Ungesättigte Polyesterharzzusammensetzung gemäß einem der Ansprüche 1 bis 5, ferner umfassend eine Itaconatverbindung, vorzugsweise ferner umfassend ein Dialkylitaconat, bevorzugter ferner umfassend Dimethylitaconat (DMI).

7. Ungesättigte Polyesterharzzusammensetzung gemäß Anspruch 6, wobei das kombinierte Gewicht von (Meth)acrylatverbindung und Itaconatverbindung wenigstens 5 bis höchstens 95 Gew.-% des Gesamtgewichts der ungesättigten Polyesterharzzusammensetzung beträgt; vorzugsweise 10 bis 70 Gew.-%, bevorzugter 20 bis 60 Gew.-%, höchst bevorzugt 30 bis 50 Gew.-%, beispielsweise 40 Gew.-%.

8. Ungesättigte Polyesterharzzusammensetzung gemäß einem der Ansprüche 1 bis 7, wobei das zugegebene Gewicht von DCPD wenigstens 10 Gew.-% des Gesamtgewichts des Polyesters beträgt.

9. Ungesättigte Polyesterharzzusammensetzung gemäß einem der Ansprüche 1 bis 8, ferner umfassend ein Übergangsmetallsalz oder einen Übergangsmetallkomplex.

10. Ungesättigte Polyesterharzzusammensetzung gemäß einem der Ansprüche 1 bis 9, ferner umfassend ein Cobaltsalz oder Cobaltpolymer.

11. Verwendung einer ungesättigten Polyesterharzzusammensetzung gemäß einem der Ansprüche 1 bis 10 als Baumaterial für einen Strukturteil.

12. Verwendung einer ungesättigten Polyesterharzzusammensetzung gemäß einem der Ansprüche 1 bis 10 als Gelbeschichtungsformulierung oder Beschichtungsformulierung.

13. Verwendung gemäß Anspruch 11 oder Anspruch 12 in einem offenen Formwerkzeug.

14. Verfahren zur Herstellung einer ungesättigten Polyesterharzzusammensetzung, vorzugsweise der ungesättigten Polyesterharzzusammensetzung gemäß einem der Ansprüche 1 bis 10, wobei das Verfahren die Schritte umfasst:
- Bilden eines Polyesters aus wenigstens:
- Reagens a), umfassend Itaconsäure und/oder Itaconsäureanhydrid;
- Reagens b), umfassend Maleinsäure, Maleinsäureanhydrid und/oder Fumarsäure;
- Reagens c), umfassend Dicyclopentadien (DCPD); und
- Reagens d), umfassend wenigstens einen di- oder polyfunktionellen Alkohol;
- Mischen des erhaltenen Polyesters mit einer (Meth)acrylatverbindung, um die ungesättigte Polyesterharzzusammensetzung zu erhalten;
wobei das kombinierte Gewicht von Reagens a) wenigstens 10 Gew.-%, vorzugsweise wenigstens 20 Gew.-%, des Gesamtgewichts von Disäuren und Anhydriden, die in der ungesättigten Polyesterharzzusammensetzung verwendet werden, beträgt.

15. Verfahren gemäß Anspruch 14, umfassend den Schritt des Bildens eines Reaktionsgemischs aus Reagens b), Reagens c) und gegebenenfalls Reagens a) vor dem Bilden des Polyesters.

## Revendications

1. Composition de résine de polyester insaturé comprenant :
- un composé de type (méth)acrylate ; et
- un polyester formé à partir d'au moins :
o un réactif a) comprenant de l'acide itaconique et/ou de l'anhydride itaconique ;
o un réactif b) comprenant de l'acide maléique, de l'anhydride maléique et/ou de l'acide fumarique ;
o un réactif c) comprenant du dicyclopentadiène (DCPD) ; et
o un réactif d) comprenant au moins un alcool difonctionnel ou polyfonctionnel ;
le poids combiné de réactif a) étant d'au moins 10 % en poids, préférablement d'au moins 20 % en poids, du poids total de diacides et d'anhydrides utilisés dans la composition de résine de polyester insaturé.

2. Composition de résine de polyester insaturé selon la revendication 1, un mélange réactionnel étant formé à partir du réactif b), du réactif c) et éventuellement du réactif a), avant que le polyester ne soit formé.

3. Composition de résine de polyester insaturé selon la revendication 1 ou la revendication 2, le poids de composés organiques volatils (VOC) étant inférieur à 10 % en poids du poids total de la composition de résine de polyester insaturé ; préférablement inférieur à 5 % en poids, encore plus préférablement inférieur à 2 % en poids et encore plus préférablement inférieur à 1 % en poids.

4. Composition de résine de polyester insaturé selon l'une quelconque des revendications 1 à 3, le poids combiné de styrène, d'alfa-méthylstyrène, de vinyltoluène et/ou de méthacrylate de méthyle étant inférieur à 10 % en poids du poids total de la composition de résine de polyester insaturé ; préférablement inférieur à 5 % en poids, encore plus préférablement inférieur à 2 % en poids et encore plus préférablement inférieur à 1 % en poids.

5. Composition de résine de polyester insaturé selon l'une quelconque des revendications 1 à 4, le poids du composé de type (méth)acrylate étant d'au moins 5 à au plus 95 % en poids du poids total de la composition de résine de polyester insaturé ; préférablement de 10 à 70 % en poids, plus préférablement de 20 à 60 % en poids, le plus préférablement de 30 à 50 % en poids, par exemple de 40 % en poids.

6. Composition de résine de polyester insaturé selon l'une quelconque des revendications 1 à 5, comprenant en outre un composé de type itaconate, préférablement comprenant en outre un itaconate de dialkyle, plus préférablement comprenant en outre l'itaconate de diméthyle (DMI).

7. Composition de résine de polyester insaturé selon la revendication 6, le poids combiné du composé de type (méth)acrylate et du composé de type itaconate étant d'au moins 5 à au plus 95 % en poids du poids total de la composition de résine de polyester insaturé ; préférablement 10 à 70 % en poids, plus préférablement 20 à 60 % en poids, le plus préférablement 30 à 50 % en poids, par exemple de 40 % en poids.

8. Composition de résine de polyester insaturé selon l'une quelconque des revendications 1 à 7, le poids ajouté de DCPD étant d'au moins 10 % en poids du poids total du polyester.

9. Composition de résine de polyester insaturé selon l'une quelconque des revendications 1 à 8, comprenant en outre un sel de métal de transition ou un complexe métal de transition.

10. Composition de résine de polyester insaturé selon l'une quelconque des revendications 1 à 9, comprenant en outre un sel de cobalt ou un polymère de cobalt.

11. Utilisation d'une composition de résine de polyester insaturé selon l'une quelconque des revendications 1 à 10 en tant que matériau de construction pour une pièce structurale.

12. Utilisation d'une composition de résine de polyester insaturé selon l'une quelconque des revendications 1 à 10 en tant que formulation de revêtement de gel ou formulation de revêtement.

13. Utilisation selon la revendication 11 ou la revendication 12, dans un moule ouvert.

14. Procédé pour la préparation d'une composition de résine de polyester insaturé, préférablement de la composition de résine de polyester insaturé selon l'une quelconque des revendications 1 à 10, le procédé comprenant les étapes de :
- formation d'un polyester à partir d'au moins :
o un réactif a) comprenant de l'acide itaconique et/ou de l'anhydride itaconique ;
o un réactif b) comprenant de l'acide maléique, de l'anhydride maléique et/ou de l'acide fumarique ;
o un réactif c) comprenant du dicyclopentadiène (DCPD) ; et
o un réactif d) comprenant au moins un alcool difonctionnel ou polyfonctionnel ;
- mélange du polyester obtenu avec un composé de type (méth)acrylate, obtenant ainsi la composition de résine de polyester insaturé ;
le poids combiné de réactif a) étant d'au moins 10 % en poids, préférablement d'au moins 20 % en poids, du poids total de diacides et d'anhydrides utilisés dans la composition de résine de polyester insaturé.

15. Procédé selon la revendication 14, comprenant l'étape de formation d'un mélange réactionnel à partir du réactif b), du réactif c) et éventuellement du réactif a), avant la formation du polyester.
